# EUROPEAN PATENT SPECIFICATION

(11) **EP 0 715 986 B1**
(45) Date of publication and mention of the grant of the patent: **10.05.2000**
(21) Application number: 95203355.3
(22) Date of filing: 06.12.1995
(51) Int. Cl.: B60P 1/44

(54) **Loading device for vehicles and vehicles equipped with it**
Ladevorrichtung für Fahrzeuge und Fahrzeuge versehen mit derselben
Dispositif de chargement d'un véhicule et véhicule équipé de ce dispositif

(30) Priority: 06.12.1994 BE 9401108
(43) Date of publication of application: 12.06.1996
(73) Proprietor: RAYMAEKERS & KAAG, afgekort "R & K", besloten vennootschap met beperkte aansprakelijkheid, 3020 Herent (BE)
(72) Inventor: Raymaekers, Yvan, 3020 Herent (BE); Kaag, Michael, 3071 Kortenberg (BE)
(74) Representative: Donné, Eddy

(56) References cited:
- EP-A- 0 140 742
- WO-A-94/27546
- US-A- 4 083 429
- US-A- 4 239 440

## Description

This invention concerns a loading device for vehicles and also vehicles equipped with it.

This invention is specially fit for vans, however not excluding other vehicles.

Loading devices for vehicles are already known in different kinds. The classical realisations exist of load platforms that replace the rear doors or that are placed vertically behind the rear doors. They also exist in forms where they are folded away underneath the vehicle. Those platforms are moved by hydraulic cylinders for the movement up and down and they are moved by hydraulic cylinders for closing and inclination adjustment.

There are also loading platforms known that are mounted on a turning arm at the inside of the vehicle. This arm is mounted on the floor and against the rear door pillar. Those areas normally need to be reinforced.

The disadvantages of those known devices are that they are relatively heavy whereby the vehicle structure is locally heavily loaded. For that reason they are not very well fit for the light chassis of delivery vans. On top of this those installations are relatively expensive compared to the price of the vehicle itself.

Some of the known loading devices are often of a complicated construction that is not very user friendly.

Examples of existing documents are described in US 4.083.429, EP 0.140.742 and US 4.239.440, each disclosing the features of the preamble of independent claim 1.

The invention aims a loading device which is improved in view of the state of the art and which does not show the abovesaid disadvantages.

To this end the invention consists in a loading device for vehicles, comprising a moveable loading platform, means to slide out the loading platform horizontally and means to lower, respectively rise the loading platform in slid outward position, characterized in that the means to slide out the loading platform comprise a movement enlarger.

The use of the movement enlarger provides the advantage that relatively simple driving means can be used, as the displacement at the driving means may be small.

In a preferable embodiment, the movement enlarger consists mainly of, on the one hand, toothed strips, fixed respectively to the fixed frame and the moveable frame and, on the other hand, at least one cogwheel, moveable by means of the drive means, more specifically a pressure cilinder, that co-operates with both a toothed strip on the fixed frame and a toothed strip on the moveable frame.

This invention further aims, in its preferable form, to be a device that also possesses following advantages:
- Loading and unloading happens in only two movements
- Commanding is very easy because of the automated movements
- Compact construction
- Lightweight construction
- The available storage surface of the vehicle does not decrease by the installation of this device
- High loading capacity
- All movements happen by the use of just one or two actuators
- While the loading platform is part of the actual storage floor, it is no longer necessary to move the load from the platform onto the storage floor and vice versa.
- The possibility of a very quick reparation. All moving parts are fixed onto the sliding part of the system. This sliding part can easily be replaced by another.
- Possibility to be used as an automatic sliding floor.

In order to show the aspects of the invention better, one example of the preferable construction, without limiting character, is hereby described, referring to the accompanying drawings, whereby:
figures 1 to 3 show a vehicle in perspective that has been equipped with a loading device according to the invention. Hereby the device is shown in three positions;
figure 4 shows in outline from the top a part of the propulsion system of the loading device according to figures 1 to 3;
figure 5 shows the propulsion system of figure 4 in a different position.
figure 6 shows on a bigger scale and more detailed a cut-through according to line VI-VI in figure 5;
figure 7 gives a view similar to that of figure 6, from another angle
figure 8 gives a view according to the flash in figure 5;
figure 9 shows the view according to figure 8 in a different position.

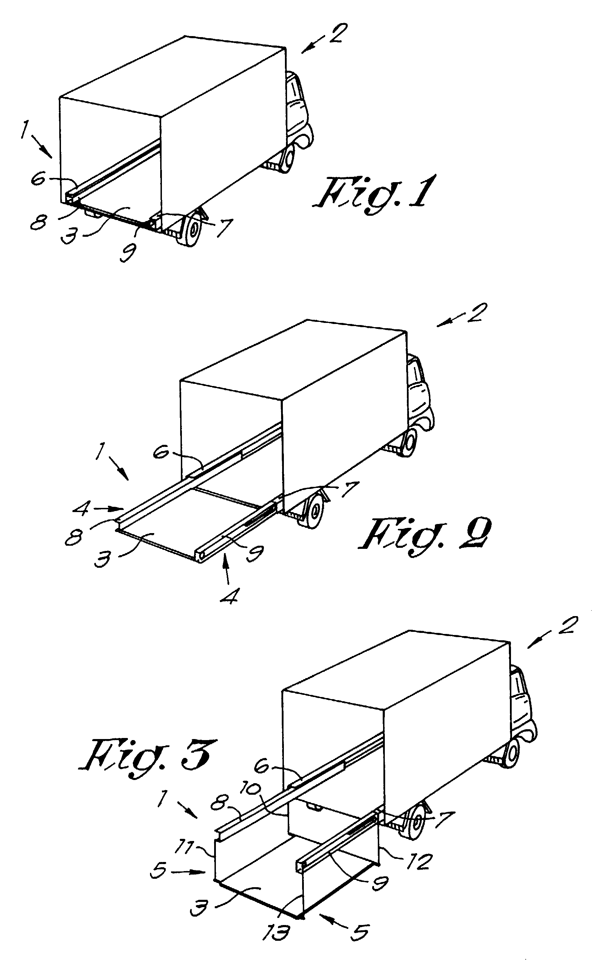

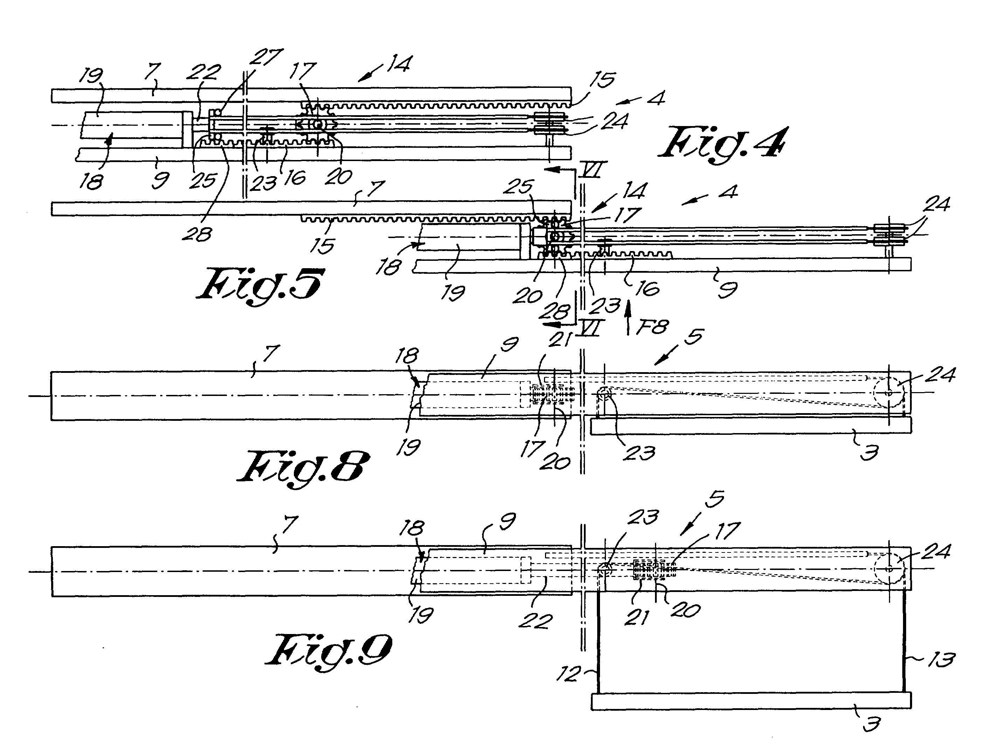

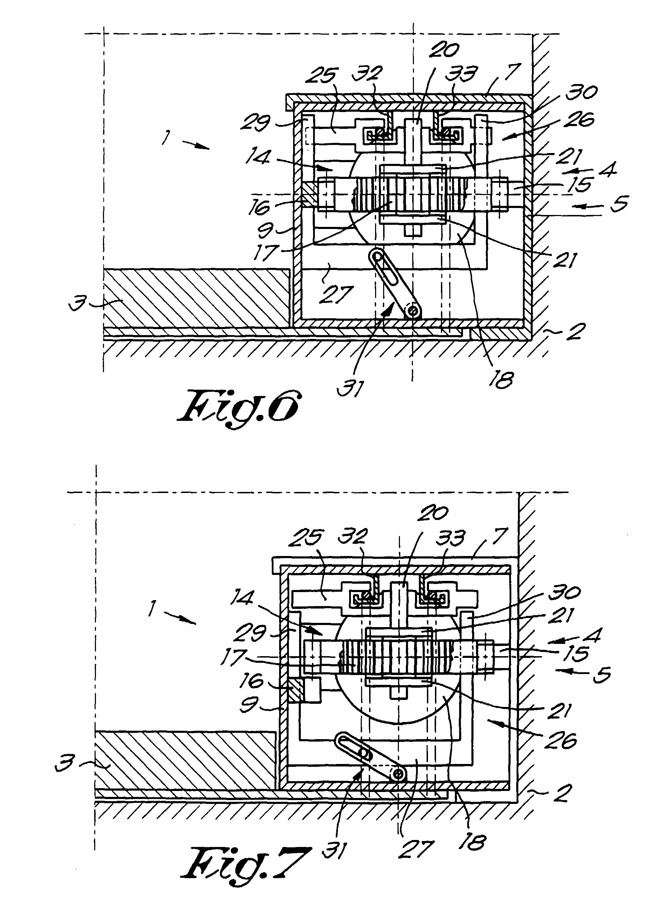

As shown in figures 1 to 3 the invention concerns a loading device 1 for a vehicle 2.

This loading device 1 exists primarily of a moveable loading platform 3; means 4 to slide the platform 3 horizontally into the position of figure 2; means 5 to move the platform 3 up and down in its outward slid position.

The means 4 to slide platform 3 in and out, exist in the given example of a frame, a sliding part and the up and down moving platform. This frame exists out of profiles 6 and 7 on both sides of the vehicle 2. The sliding part is formed by the sliding profiles 8 and 9 that slide in the profiles 6 and 7. The platform is movably fixed onto the profiles 8 and 9.

The means 5 to lower and rise the platform 3 in its outward slid position, exist preferably out of a hoist installation with flexible hoist elements 10-13, more specially chains or cables, that are fixed between the platform 3 and the sliding part.

Although it is not excluded that the loading platform 3 will be actuated manually for example with a manual winch, it is preferred that the loading device is moved by motorised actuators.

For the in- and out sliding movement of platform 3 one uses preferably actuating elements 14, equipped with a movement enlarger.

As shown in figures 4 to 5, this movement enlarger can exist out of dented strips 15, fixed to the frame, more specifically profiles 6 and 7, and out of cogged strips 16, fixed to the sliding platform, more specifically profiles 8 and 9. Between those cogged strips there is a moveable cogwheel 17 that is moved by the actuators 14.

In figures 4 and 5 only the actuating part of one side of the loading device is shown. It is apparent that the other side has a similar actuating system.

For the displacement of cogwheel 17 one uses preferably a linear motor, like the hydraulic cylinder 18. As shown the housing 19 of the cylinder 18, can be fixed to the accompanying profile 8-9, whereas the cogwheel 17 can be fixed turnable onto the piston rod by for instance fork 21 and axle 20.

As shown in figures 4 and 5 it is clear that by pulling in piston rods 22 profiles 8-9 and platform 3 that is fixed onto those profiles will slide outward and vice versa.

The movement of the means 5 happens preferably with the actuators 14.

As shown in figures 5 to 9, hoist elements 10-13 can hereby be lowered or lifted whereby they are guided by elements 23 and 24 and whereby they are attached to piston rods 22 by fixation elements 25.

Hereby a switch mechanism 26 is used that allows the actuators, more specifically the cylinders 18, to be detached from the means 4 to slide the platform in and out and to be attached to the means 5 to lower and rise the platform. On each side of the device such a switch mechanism is used.

The switch mechanism 26 shows a lock 27 that locks the platform 3 in its upper position when it is slid in and out. By switching the mechanism, the sliding will be blocked and the hoisting will be actuated.

According to the realisation of figures 6 and 7, each lock 27 consists of a moveable section that bears a piece of cog strip 28 out of cog strip 16. Further the lock has legs 29 and 30 that can hold element 25. The displacement of locking part 27 goes so far that in its lower position, as shown in figure 7, the cog strip 28 will be detached from cogwheel 17 and the legs 29 and 30 will be detached from element 25, so that this element can move. Further locking part 27 will preferably lock 6 to 7 and 7 to 9 to block the horizontal movement.

The switch can be actuated by a mechanism 31, that is only showed partly. The actuation can be carried out manually or automatically.

We would like to remark that all actuating and moving parts are fully integrated into the sliding part. This enables quick reparations by just changing the sliding part.

The hoist elements 13-13 can be guided in gutters 32-33 that can be fixed onto the profiles 8 and 9.

It is clear that the whole construction can be attached to a vehicle very easily. The platform 3 can thereby be an integrated part of the (double) floor of the vehicle.

The functioning of the loading device 1 is mainly as follows.

In its rest position piston rods 22 of the cylinders 18 are pushed out, as shown in figure 4. In order to slide platform 3 out, the piston rods 22 will be pulled in. The displacement of the platform 3 will thereby be twice as big as the displacement of the piston rods 22. The platform will in the end arrive in the position as shown in figure 2.

As shown in figure 5, the axles 20 will hereby position themselves exactly beside the connection elements 25.

By switching locks 27, the platform 3 will no longer be blocked by switches 29 and 30, but by axles 20. As cog strips 28 were detached from the cogwheel at the same time, the displacement of the piston rods 22 has no longer influence on the horizontal movement of platform 3. It is clear that platform 3 will now be lowered when the piston rods 22 are pushed out.

The unloading procedure goes the other way around.

The actual invention is not limited to the example described in these figures. Such a loading device for vehicles can be realised in different forms and geometries, without leaving the scope of the appendent claims.

## Claims

1. Loading device for vehicles, comprising a moveable loading platform (3), means (4) to slide out the loading platform (3) horizontally; and means (5) to lower, respectively rise the loading platform (3) in slid outward position, characterized in that the means to slide out the loading platform (3) comprise a movement enlarger.

2. Loading device according to claim 1, characterized in that the means (4) to slide out the loading platform (3) horizontally exist mainly of a fixed frame and a sliding frame whereto the loading platform (3) is fixed movably up and down.

3. Loading device according to claim 2, characterized in that the fixed frame and the sliding frame exist mainly of profiles (6-7-8-9) slidable in each other.

4. Loading device according to claims 2 or 3, characterized in that the means (5) to lower, respectively rise the loading platform (3) in its slid outward position exist of a hoisting device with flexible hoisting elements (10-11-12-13), more specifically chains or cables which are mounted between the loading platform (3) and the fixed frame.

5. Loading device according to one of the above mentioned claims, characterized in that the means (4) to slide the loading platform (3) horizontally in and out and/or the means (5) to lower, respectively rise the loading platform (3) in its slid outward position are provided with motorized drive means (14).

6. Loading device according to claim 5, characterized in that the drive means (14) exist of at least one linear motor, more specifically a pressure cylinder (18).

7. Loading device according to any of the aforegoing claims, characterized in that the movement enlarger exists mainly of, on the one hand, toothed strips (15-16), fixed respectively to a fixed frame and a moveable frame, and on the other hand, at least one cogwheel (17), movable by means of drive means (14), that cooperates with both a toothed strip (15) on the fixed frame and a toothed strip (16) on the moveable frame.

8. Loading device according to any of the aforegoing claims, characterized in that the means (4) to slide out the loading platform (3) and the means (5) to lower, respectively rise the loading platform (3) in its outward slid position have common drive means (14).

9. Loading device according to claim 8, characterized in that it is provided with a switch mechanism (26) that enables it to detach the drive means (14) in the outward slid position of the loading platform (3) from the means (4) which slide the loading platform (3) in and out horizontally and which attach the means (14) to the means (5) to lower, respectively rise the loading platform (3)in its outward slid position, and vice versa.

10. Loading device according to claims 4, 6, 7 and 9, characterized in that the switch mechanism (26) exists of a lock (27); that the lock (27) in a first position locks the loading platform (3) in its raised position and mutually couples the toothed strips (15-16) acting together; that in a second position of the lock (27) the loading platform (3) is unlocked and the toothed strips (15-16) are uncoupled; that the profiles (6-8) and (7-9) are coupled; and that the hoisting device is provided with coupling elements (25) which cooperate with the drive means (14) of the loading platform (3) in its slid outward position.

11. Loading device according to any of the aforegoing claims, characterized in that it is provided with drive means (14) and accompanying moving parts which are fully integrated into the moveable frame.

12. Loading device according to any of the aforegoing claims, characterised in that the means (4) to slide out the loading platform (3) comprise profiles (6-7-8-9) which are slidable in respect to each other; in that the means (5) to lower, respectively rise the loading platform (3) comprise hoist elements (10-13); and in that the movement enlarger and hoisting elements (10-13) are mounted at, more particularly integrated in said profiles (6-7-8-9).

13. Vehicle that has been equipped with a loading device according to claims 1 to 11, characterized in that the loading platform is part of an elevated double floor.

## Patentansprüche

1. Ladevorrichtung für Fahrzeuge, umfassend eine bewegbare Ladeplattform (3), Mittel (4) zum horizontalen Ausfahren der Ladeplattform (3); und Mittel (5) zum Absenken, beziehungsweise Anheben der Ladeplattform (3) in ausgefahrener Position, dadurch gekennzeichnet, dass die Mittel zum Ausfahren der Ladeplattform (3) einen Bewegungsvergrößerer umfassen.

2. Ladevorrichtung gemäß Anspruch 1, dadurch gekennzeichnet, dass die Mittel (4) zum horizontalen Ausfahren der Ladeplattform (3) hauptsächlich aus einem fest angebrachten Gestell und einem Schiebegestell, an dem die Ladeplattform (3) auf- und abbewegbar befestigt ist, bestehen.

3. Ladevorrichtung gemäß Anspruch 2, dadurch gekennzeichnet, dass das fest angebrachte Gestell und das Schiebegestell hauptsächlich aus ineinander verschiebbaren Profilen (6-7-8-9) bestehen.

4. Ladevorrichtung gemäß den Ansprüchen 2 oder 3, dadurch gekennzeichnet, dass die Mittel (5) zum Absenken, beziehungsweise Anheben der Ladeplattform (3) in ihrer ausgefahrenen Position aus einer Hubvorrichtung mit flexiblen Hubelementen (10-11-12-13), insbesondere Ketten oder Kabeln, die zwischen der Ladeplattform (3) und dem fest angebrachten Gestell montiert sind, bestehen.

5. Ladevorrichtung gemäß einem der oben erwähnten Ansprüche, dadurch gekennzeichnet, dass die Mittel (4) zum horizontalen Ein- und Ausfahren der Ladeplattform (3) und/oder die Mittel (5) zum Absenken, beziehungsweise Anheben der Ladeplattform (3) in ihrer ausgefahrenen Position mit motorisierten Antriebsmitteln (14) versehen sind.

6. Ladevorrichtung gemäß Anspruch 5, dadurch gekennzeichnet, dass die Antriebsmittel (14) aus zumindest einem Linearmotor, spezieller einem Druckzylinder (18), bestehen.

7. Ladevorrichtung gemäß einem der vorgenannten Ansprüche, dadurch gekennzeichnet, dass der Bewegungsvergrößerer hauptsächlich aus, einerseits, Zahnstangen (15-16), die an einem fest angebrachten Gestell beziehungsweise an einem bewegbaren Gestell befestigt sind, und, andererseits, zumindest einem mittels Antriebsmitteln (14) bewegbaren Zahnrad (17) besteht, das sowohl mit einer Zahnstange (15) an dem fest angebrachten Gestell als auch einer Zahnstange (16) an dem bewegbaren Gestell zusammenwirkt.

8. Ladevorrichtung gemäß einem der vorgenannten Ansprüche, dadurch gekennzeichnet, dass die Mittel (4) zum Ausfahren der Ladeplattform (3) und die Mittel (5) zum Absenken, beziehungsweise Anheben der Ladeplattform (3) in ihrer ausgefahrenen Position gemeinsame Antriebsmittel (14) aufweisen.

9. Ladevorrichtung gemäß Anspruch 8, dadurch gekennzeichnet, dass sie mit einem Schaltmechanismus (26) versehen ist, der es ermöglicht, die Antriebsmittel (14) in der ausgefahrenen Position der Ladeplattform (3) von den Mitteln (4), die die Ladeplattform (3) horizontal ein- und ausfahren, abzukoppeln und die Mittel (14) an den Mitteln (5) zum Absenken, beziehungsweise Anheben der Ladeplattform (3) in ihrer ausgefahrenen Position anzukoppeln, und umgekehrt.

10. Ladevorrichtung gemäß den Ansprüchen 4, 6, 7 und 9, dadurch gekennzeichnet, dass der Schaltmechanismus (26) aus einer Verriegelung (27) besteht; dass die Verriegelung (27) in einer ersten Position die Ladeplattform (3) in ihrer angehobenen Position verriegelt und die zusammenwirkenden Zahnstangen (15-16) miteinander koppelt; dass in einer zweiten Position der Verriegelung (27) die Ladeplattform (3) entriegelt ist und die Zahnstangen (15-16) abgekoppelt sind; dass die Profile (6-8) und (7-9) gekoppelt sind; und dass die Hubvorrichtung mit Koppelelementen (25) versehen ist, die mit den Antriebsmitteln (14) der Ladeplattform (3) in ihrer ausgefahrenen Position zusammenwirken.

11. Ladevorrichtung gemäß einem der vorgenannten Ansprüche, dadurch gekennzeichnet, das sie mit Antriebsmitteln (14) und zugehörigen bewegenden Teilen, die vollständig in das bewegbare Gestell integriert sind, versehen ist.

12. Ladevorrichtung gemäß einem der vorgenannten Ansprüche, dadurch gekennzeichnet, dass die Mittel (4) zum Ausfahren der Ladeplattform (3) Profile (6-7-8-9) umfassen, die in Bezug zueinander verschiebbar sind; dadurch, dass die Mittel (5) zum Absenken, beziehungsweise Anheben der Ladeplattform (3) Hubelemente (10-13) umfassen; und dadurch, dass der Bewegungsvergrößerer und die Hubelemente (10-13) an besagten Profilen (6-7-8-9) montiert, spezieller darin integriert sind.

13. Mit einer Ladevorrichtung gemäß den Ansprüchen 1 bis 11 ausgestattetes Fahrzeug, dadurch gekennzeichnet, dass die Ladeplattform Teil eines erhöhten doppelten Bodens ist.

## Revendications

1. Dispositif de chargement pour des véhicules, comprenant une plate-forme de chargement mobile (3), des moyens (4) pour faire coulisser la plate-forme de chargement (3) en direction horizontale et des moyens (5) pour abaisser, respectivement lever la plate-forme de chargement (3) dans la position externe atteinte par coulissement, caractérisé en ce que les moyens pour faire sortir la plate-forme de chargement (3) par coulissement comprennent un amplificateur du mouvement.

2. Dispositif de chargement selon la revendication 1, caractérisé en ce que les moyens (4) pour faire sortir la plate-forme de chargement (3) par coulissement en direction horizontale sont constitués principalement par un cadre fixe et par un cadre de coulissement auquel est fixée la plate-forme de chargement (3) en mobilité ascendante et descendante.

3. Dispositif de chargement selon la revendication 2, caractérisé en ce que le cadre fixe et le cadre de coulissement sont constitués principalement par des profilés (6-7-8-9) aptes à coulisser l'un dans l'autre.

4. Dispositif de chargement selon la revendication 2 ou 3, caractérisé en ce que les moyens (5) pour abaisser, respectivement lever la plate-forme de chargement (3) dans sa position externe atteinte par coulissement sont constitués par un dispositif de levage comprenant des éléments de levage flexibles (10-11-12-13), plus spécifiquement des chaînes ou des câbles qui sont montés entre la plate-forme de chargement (3) et le cadre fixe.

5. Dispositif de chargement selon l'une quelconque des revendications mentionnées ci-dessus, caractérisé en ce que les moyens (4) pour faire coulisser la plate-forme de chargement (3) en direction horizontale vers l'intérieur et vers l'extérieur, et/ou les moyens (5) pour abaisser, respectivement lever la plate-forme de chargement (3) dans sa position externe atteinte par coulissement sont équipés de moyens d'entraînement motorisés (14).

6. Dispositif de chargement selon la revendication 5, caractérisé en ce que les moyens d'entraînement (14) sont constitués par au moins un moteur linéaire, plus spécifiquement par un cylindre de pression (18).

7. Dispositif de chargement selon l'une quelconque des revendications précédentes, caractérisé en ce que l'amplificateur du mouvement est constitué principalement d'une part par des bandes dentées (15-16) fixées respectivement à un cadre fixe et à un cadre mobile, et d'autre part par au moins un roue dentée (17) qui peut être mise en mouvement à l'aide de moyens d'entraînement (14), qui coopère à la fois avec une bande dentée (15) sur le cadre fixe et avec une bande dentée (16) sur le cadre mobile.

8. Dispositif de chargement selon l'une quelconque des revendications précédentes, caractérisé en ce que les moyens (4) pour faire coulisser la plate-forme de chargement (3) vers l'extérieur et les moyens (5) pour abaisser, respectivement lever la plate-forme de chargement (3) dans sa position externe atteinte par coulissement possèdent des moyens d'entraînement communs (14).

9. Dispositif de chargement selon la revendication 8, caractérisé en ce qu'il est muni d'un mécanisme de commutation (26) qui lui permet, dans la position externe de la plate-forme de chargement (3) atteinte par coulissement, de déconnecter les moyens d'entraînement (14) des moyens (4) qui font coulisser la plate-forme de chargement (3) vers l'intérieur et vers l'extérieur en direction horizontale et de connecter les moyens (14) aux moyens (5) pour abaisser, respectivement lever la plate-forme de chargement (3) dans sa position externe atteinte par coulissement et vice versa.

10. Dispositif de chargement selon les revendications 4 6, 7 et 9, caractérisé en ce que le mécanisme de commutation (26) est constitué par un verrou (27); en ce que le verrou (27) dans une première position bloque la plate-forme de chargement (3) dans sa position levée et accouple réciproquement les bandes dentées (15-16) agissant de manière conjointe; en ce que dans une seconde position du verrou (27), la plate-forme de chargement (3) est débloquée et les bandes dentées (15-16) sont désaccouplées; en ce que les profilés (6-8) et (7-9) sont accouplés; et en ce que le dispositif de levage est muni d'éléments d'accouplement (27) qui coopèrent avec les moyens d'entraînement (14) de la plate-forme de chargement (3) dans sa position externe atteinte par coulissement.

11. Dispositif de chargement selon l'une quelconque des revendications précédentes, caractérisé en ce qu'il est muni de moyens d'entraînement (14) et d'éléments mobiles secondaires qui sont complètement intégrés dans le châssis mobile.

12. Dispositif de chargement selon l'une quelconque des revendications précédentes, caractérisé en ce que les moyens (4) pour faire coulisser la plate-forme de chargement (3) vers l'extérieur comprennent des profilés (6-7-8-9) qui sont aptes à coulisser l'un par rapport à l'autre; en ce que les moyens (5) pour abaisser, respectivement lever la plate-forme de chargement (3) comprennent des éléments de levage (10-13); et en ce que l'amplificateur du mouvement et les éléments de levage (10-13) sont montés sur, plus particulièrement sont intégrés dans lesdits profilés (6-7-8-9).

13. Véhicule qui est équipé avec un dispositif de chargement selon les revendications 1 à 11, caractérisé en ce que la plate-forme de chargement fait partie d'un double plancher surélevé.
